# EUROPÄISCHE PATENTSCHRIFT

(11) **EP 2 034 302 B1**
(45) Veröffentlichungstag und Bekanntmachung des Hinweises auf die Patenterteilung: **03.12.2014**
(21) Anmeldenummer: 08014606.1
(22) Anmeldetag: 18.08.2008
(51) Int. Cl.: G01N 27/414

(54) **Schaltungsanordnung mit einem CC-FET-Gassensor und Verfahren zu dessen Ansteuerung**
Circuit arrangement with a CC-FET gas sensor and method for its control
Circuiterie dotée d'un capteur de gaz CC FET et son procédé de commande

(30) Priorität: 06.09.2007 DE 102007042265
(43) Veröffentlichungstag der Anmeldung: 11.03.2009
(73) Patentinhaber: Micronas GmbH, 79108 Freiburg (DE)
(72) Erfinder: Bachmaier, Georg, 81675 München (DE); Johnke, Dieter, 48301 Nottuln (DE); Henning, Oliver, 82469 München (DE); Simon, Elfriede, 80639 München (DE); Tump, Christian, 80687 München (DE); Meixner, Hans, 85540 Haar (DE)
(74) Vertreter: Koch Müller Patentanwaltsgesellschaft mbH

(56) Entgegenhaltungen:
- EP-A2- 1 715 333
- WO-A1-2005/103668
- DE-A1- 10 161 214
- Martin Zimmer: "Mikrosensoren auf Transistor-Basis zur Wasserstoff- und Ozondetektion. Dissertation" 17. November 2003 (2003-11-17), Universität der Bundeswehr München , München , XP002603629 , Seiten 33-58 * Seiten 56-58 *
- BURGMAIR M ET AL: "Field effect transducers for work function gas measurements: device improvements and comparison of performance" SENSORS AND ACTUATORS B, ELSEVIER SEQUOIA S.A., LAUSANNE, CH LNKD- DOI:10.1016/S0925-4005(03)00412-X, Bd. 95, Nr. 1-3, 15. Oktober 2003 (2003-10-15), Seiten 183-188, XP004454668 ISSN: 0925-4005
- GUPTA R P ET AL: "YBCO-FET room temperature ammonia sensor" SENSORS AND ACTUATORS B, ELSEVIER SEQUOIA S.A., LAUSANNE, CH LNKD- DOI:10.1016/S0925-4005(99)00512-2, [Online] Bd. 63, Nr. 1-2, 1. April 2000 (2000-04-01), Seiten 35-41, XP004195044 ISSN: 0925-4005 Gefunden im Internet: URL:http://ub.unibw-muenchen.de/dissertati onen/ediss/zimmer-martin/inhalt.pdf> [gefunden am 2010-10-05]
- POHL R ET AL: "Realization of a new sensor concept: emproved ccfet and sgfet type gas sensors in hybrid flip-chip technology" TRANSDUCERS, SOLID-STATE SENSORS, ACTUATORS AND MICROSYSTEMS, 12TH INN ATIONAL CONFERENCE ON, 2003, PISCATAWAY, NJ, USA,IEEE, Bd. 1, 9. Juni 2003 (2003-06-09), Seiten 135-138, XP010646487 ISBN: 978-0-7803-7731-8
- KNITTEL TH ET AL: "Combined ammonia and hydrogen gas sensor" PROCEEDINGS OF IEEE SENSORS 2003 (IEEE CAT. NO.03CH37498) IEEE PISCATAWAY, NJ, USA; [IEEE INTERNATIONAL CONFERENCE ON SENSORS],, Bd. 1, 22. Oktober 2003 (2003-10-22), Seiten 191-194, XP010692251 ISBN: 978-0-7803-8133-9

## Beschreibung

Die Erfindung bezieht sich auf eine Schaltungsanordnung mit einem CC-FET-Gassensor gemäß den oberbegrifflichen den Merkmalen des Patentanspruchs 1 und ein Verfahren zu dessen Ansteuerung.

Aus DE 101 61 214 A1 ist ein "Gassensor und Verfahren zur Detektion von Wasserstoff nach dem Prinzip der Austrittsarbeitsmessung, sowie ein Verfahren zur Herstellung eines solchen Gassensors" bekannt.

Im Rahmen eines medizintechnischen Projektes unter der Bezeichnung LOCOMED sollte eine kostengünstige und nicht invasive Applikation entwickelt werden, welche es ermöglicht Markergase, die zur Diagnose von Krankheiten in der Ausatemluft eines Patienten von Bedeutung sind, nachzuweisen. Technisch realisiert wurde eine solche Anwendung mittels eines CC-FET-Gassensors (CC-FET: Capacitive Controlled Field Effect Transistor / kapazitiv gesteuerter Feldeffekt-Transistor), der es ermöglicht, Gase auch in kleinen Konzentrationsbereichen zu detektieren.
Durch seine Empfindlichkeit sind aber sehr starke Driftverhalten des Messelements zu beobachten, was ein großes Problem für die Messungen darstellt, weil dieses Driften sogar Stunden oder Tage andauern kann. Zur Zeit sind Langzeitmessungen schwer möglich, da bei passiver Ansteuerung des CC-FETs der Arbeitsbereich schnell durch eine Drift verlassen wird. Diese entsteht durch Ladungsverschiebungen im Luftspalt und durch Oberflächenströme des CC-FETs.

Gattungsfremd bekannt sind Verfahren, bei denen im Falle des Einsatzes eines Referenz-Prinzips zwei Sensoren gleichen Typs eingesetzt werden, von denen einer gassensitiv ist und einer nur physikalische Umgebungseinflüsse wie Temperaturschwankungen etc. auswertet. Durch differentielles Verrechnen oder entsprechendes Verschalten können ungewünschte Effekte dann bedingt neutralisiert werden.

Die Aufgabe der Erfindung besteht darin, eine Schaltungsanordnung mit einem CC-FET-Gassensor bzw. ein Verfahren zu dessen Ansteuerung vorzuschlagen, welche eine driftarme oder driftfreie Messung ermöglichen.

Diese Aufgabe wird durch die Schaltungsanordnung mit einem CCFET-Gassensor sowie durch ein Verfahren zu dessen Ansteuerung mit den Merkmalen des Patentanspruchs 1 bzw. 10 gelöst. Vorteilhafte Ausgestaltungen sind Gegenstand von abhängigen Ansprüchen.

Die Erfindung betrifft eine Schaltungsanordnung mit einem CCFET-Gassensor zum Detektieren eines Gases in einem Luftspalt, mit einer Steuereinrichtung zum Nachführen des CC-FET Gassensors als einer kapazitiven Größe, die sich insbesondere aus einer ersten und einer dritten kapazitiven Größe zusammensetzt, und mit zwei Regelkreisen, wobei der erste Regelkreis ausgebildet oder gesteuert ist, eine Wellspannung oder eine Spannung über einen Guardring zu regeln, und wobei der zweite Regelkreis ausgebildet oder gesteuert ist, eine sich ändernde Gasspannung zu regeln. Die beiden Regelkreise sind dabei vorzugsweise derart eigenständig aber gekoppelt betrieben ausgestaltet und/oder gesteuert, dass im Luftspalt und in einem Bereich einschließlich des Luftspalts sowie zwischen dem Luftspalt und einer Gateelektrode des CC-FET-Gassensors Feld- bzw. Potentialfreiheit herrscht.

Mittels einer Sample- & Hold-Schaltung ist dazu eine unterhalb des Luftspalts mit einem zu detektierenden Gas eine feld- und potentialfreie Ansteuerung des CC-FET-Gassensors umsetzbar.

Bevorzugt ist eine Gateelektrode in einem Substrat zwischen die die kapazitive Größe und eine zweite kapazitive Größe geschaltet sind und der Guardring an einen Oberflächen-Knoten zwischen einer ersten kapazitiven Größe und einer dritten kapazitiven Größe der kapazitiven Größe geschaltet ist. Die erste kapazitive Größe ist insbesondere ausgebildet durch den CC-FET-Gassensor aus dem Luftspalt zwischen einem suspendierten Gate und einer Oberfläche des Substrats zwischen dem Guardring und die dritte kapazitive Größe ist ausgebildet durch das Substrat zwischen der Oberfläche und der Gateelektrode. Die zweite kapazitive Größe ist insbesondere ausgebildet durch sowohl die Gateelektrode unterhalb des Luftspalts innerhalb des Substrats als auch durch eine Well-Elektrode mit der Wellspannung unterhalb der Gateelektrode und beabstandet von der Gateelektrode innerhalb des Substrats. Ein erster Sensor ist dabei insbesondere durch die erste kapazitive Größe und die dritte kapazitive Größe und ein zweiter Sensor des gleichen Typs zum ersten Sensor durch die zweite kapazitive Größe und eine FET-Struktur im Substrat ausgebildet. Der erste Sensor ist vorzugsweise zum gassensitiven Detektieren des Gases im Luftspalt und der zweite Sensor zum Erfassen oder Auswerten physikalischer Umgebungseinflüsse, insbesondere eines Temperatureinflusses, innerhalb der Schaltungsanordnung ausgebildet oder strukturiert.

Eigenständig bevorzugt wird außerdem ein Verfahren zum Ansteuerung oder Regeln eines solchen CC-FET-Gassensors, bei dem in einem ersten Regelkreis ein Arbeitspunkt bei einem definierten Referenzgas im Luftspalt ermittelt und festgehalten wird und in einem zweiten Regelkreis eine Kompensation eines Messsignals eines zu detektierenden Gases im Luftspalt durchgeführt wird.

Bevorzugt wird im ersten Regelkreis die Spannung des Guardrings des CC-FET-Gassensors derart proportional zu einem Well-Potential nachgeführt, dass eine Potentialdifferenz über den Luftspalt ausgeschlossen wird.

Im zweiten Regelkreis wird, wenn im Falle einer Änderung eines Markergases im Luftspalt ein zusätzliches Potential innerhalb einer gassensitiven Schicht im Luftspalt entsteht und eine daraus resultierende Potentialänderung eines floating Gates und eine Verschiebung eines Arbeitspunktes eines integrierten MOSFETs entsteht, die Kompensation durchgeführt durch Anlegen einer entsprechend entgegenwirkenden Gatespannung.

Eine bevorzugte Verwendung der Schaltungsanordnung, des CC-FET-Gassensor sowie des Verfahrens ist als Atemluft-Gassensor zum Bestimmen oder Detektieren eines Gasanteils in Atemluft.

Das Konzept nutzt somit Möglichkeiten eines Regelungsprinzips bei dem Messsystem aus. Zwei kombinierte Regelkreise steuern den CC-FET-Gassensor in geeigneter Weise und halten den Sensor mittels einer Regelschaltung dementsprechend konstant in seinem Arbeitspunkt. Ladungsverschiebungen im Luftspalt des CC-FET innerhalb eines Gassensors und Oberflächenströme werden weitestgehend verhindert durch eine im Luftspalt feld- und potentialfreie Ansteuerung der CC-FETs, was die eigentliche Besonderheit dieses Konzeptes ausmacht. Es sind daher im Idealfall keinerlei Art Referenzmessungen nötig, so dass insbesondere ein zweiter Referenz-CC-FET vorzugsweise nicht erforderlich ist.

Ein Ausführungsbeispiel wird nachfolgend anhand der Zeichnung näher erläutert. Es zeigen:
- Fig. 1: schematisch Komponenten einer Schaltungsanordnung zur Verdeutlichung eines Regelkreises für einen CC-FET-Gassensor und
- Fig. 2: ein Blockschaltbild einer verfahrensgemäßen Ansteuerung einer solchen Schaltungsanordnung.

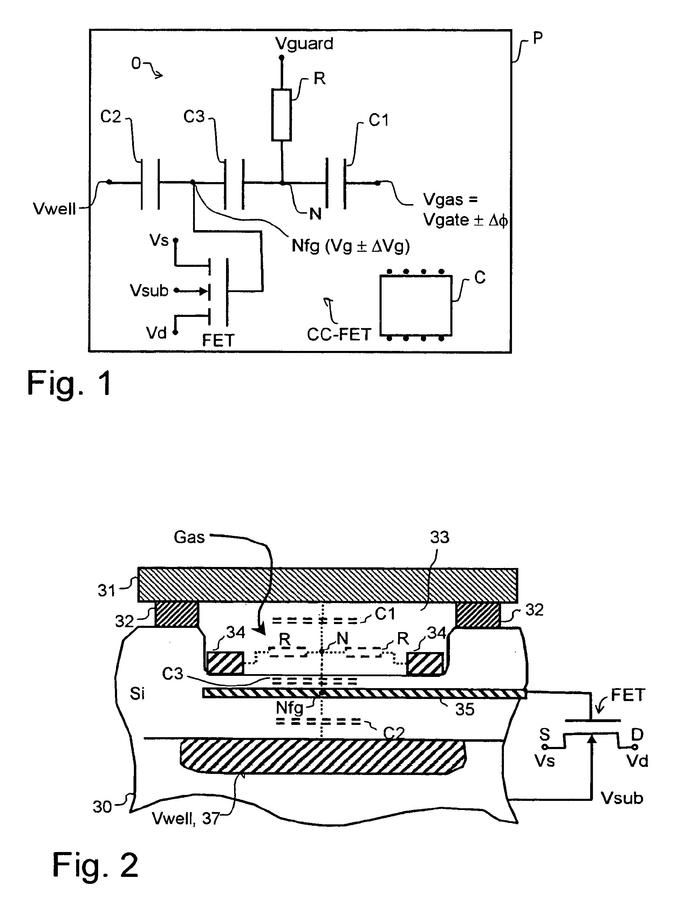

Wie aus Fig. 1 ersichtlich, weist eine Schaltungsanordnung für einen CC-FET-Gassensor, insbesondere einen solchen CC-FET-Gassensor zur Detektion von Atemluftgasen, neben einer Vielzahl weiterer für sich bekannter Komponenten, einen sogenannten CC-FET auf. Der CC-FET besteht aus einer Anordnung mit einem Feldeffekttransistor FET, insbesondere einem MOSFET, an dessen Gateanschluss ein Gate-Knoten Nfg geschaltet ist, welcher zwischen zusammengefasst zwei kapazitive Größen C1 + C3, C2 geschaltet ist.

Die kapazitiven Größen in Fig. 1 sind als drei Kondensatoren C1, C2, C3 angedeutet. Ausgehend von dem Gate-Knoten Nfg liegt über eine erste kapazitive Größe und eine damit in Reihe geschaltete dritte kapazitive Größe C3 der kapazitiven Größen C1, C3 eine Gatespannung Vgate an, welche bei einer Gasänderung an einem nicht gezeigten, aber zur Messung dienenden Luftspalt eine Potentialänderung Δφ erfährt. Die Potentialänderung Δφ ist also vom Gassignal, d.h. insbesondere von der zu detektierenden Atemluft beeinflusst.

Ausgehend vom Gate-Knoten Nfg liegt über die zweite der kapazitiven Größen C2 eine Wellspannung Vwell eines Well-Potentials an. Die Wellspannung Vwell wird durch eine Sample- & Hold-Schaltung bzw. -Steuerung derart geregelt, dass die Potentialänderung Δφ kompensiert wird.

Außerdem ist an einem weiteren Oberflächen-Knoten N ein in für sich bekannter Art und Weise ausgeführter und durch einen Widerstand R symbolisierter Guardring der CC-FET-Schaltungsanordnung geschaltet. Dieser Guardring wird nachgeführt, indem das Potential geändert wird, um eine Drift zu reduzieren. Der Oberflächen-Knoten N ist dabei im Schaltbild zwischen die erste und die dritte kapazitive Größe C1, C3 sowie den Guardring bzw. den diesen repräsentierenden Widerstand R geschaltet.

Der MOSFET weist neben dem an den Gate-Knoten Nfg geschalteten Gateanschluss in für sich bekannter Art und Weise Anschlüsse für eine Sourcespannung Vs, eine Drainspannung Vd und eine Substratspannung Vsub auf.

Der eigentliche Messvorgang mittels einer solchen Schaltungsanordnung wird in eine Kalibrierungs- und Messphase unterteilt. In der ersten Phase als der Kalibrierphase, während der sich in dem Luftspalt ein Referrenzgas befindet, wird ein definierter Arbeitspunkt eingestellt. Durch die vorzugsweise lang andauernde Kalibrierungsphase wird der Luftspalt annähernd oder insbesondere ganz feldfrei und der Übergang zwischen dem floating Gate und dem Guardring, welcher durch den Widerstand R in Fig. 1 symbolisiert ist, wird weitestgehend oder insbesondere ganz potentialfrei.

In der zweiten Phase, welche die Messphase bildet, wird die Feld- und Potentialfreiheit aufrechterhalten. Dies geschieht durch eine Spannungsänderung an der Gatespannung Vgate, die im wesentlichen der Spannungsänderung an der Oberfläche der sensitiven Schicht des CC-FETs mit umgekehrtem Vorzeichen entspricht. Dadurch wird in Gesamtheit der ursprüngliche Zustand aus der Kalibrierphase aufrechterhalten. Dadurch werden somit Ladungsverschiebungen im Luftspalt und Oberflächenströme zwischen Guardring und floating Gate ausgeschlossen, die eine Drift zur Folge hätten. Durch diese Methodik wird ein driftarmes Messen mit dieser Art von Gassensoren gewährleistet.

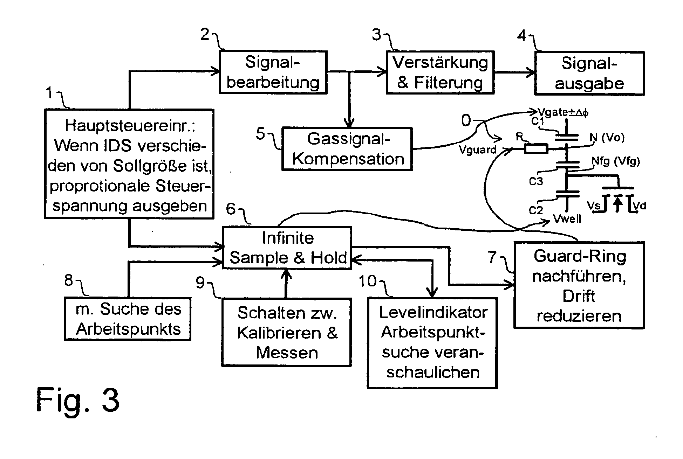

Das Blockdiagram gemäß Fig. 3 erläutert das Arbeitsprinzip des Regelkreises näher.

Wie in der Figur 3 dargestellt, ermöglicht die zentrale Steuereinrichtung in Zusammenarbeit mit dem unteren Regelkreis, die Einstellung des Arbeitspunktes mittels einer langzeitstabilen Sample & Hold-Schaltung. Ist der Arbeitspunkt bei einem definierten Referenzgas im Luftspalt gefunden, kann dieser "eingefroren", also festgehalten werden. Wichtig ist dabei, dass der Guardring des CC-FETs in geeigneter Weise proportional zu dem Well-Potential Vwell nachgeführt wird, damit eine Potentialdifferenz über diesen Punkt des Gassensors ausgeschlossen wird. Der Wert der drei kapazitiven Größen C1, C2, C3 ist in der Regel sehr groß und in der Kalibrierungsphase wird angestrebt, dass das Well-Potential Vwell, die Gatespannung Vgate und das Potential des Guardrings Vguard auf einen gleichen Wert gebracht werden, so dass im Idealfall Vwell = Vgate = Vguard = Vo = Vfg gilt -siehe auch Fig. 3.

Einmal sorgfältig eingestellt, hält der Regler, der durch die Steuereinrichtung und ggfs. weitere Komponenten gebildet wird, den Gassensor im gewünschten Bereich.

Von diesem Punkt an übernimmt der zweite Reglerkreis die Kompensation des Messsignals. Im Falle einer Änderung des Markergases im CC-FET Kanal bzw. Luftspalt entsteht ein zusätzliches Potential innerhalb der gassensitiven Schicht im Luftspalt des Gassensors. Dieses zusätzliche Potential hat eine Potentialänderung des floating Gates und damit eine Verschiebung des Arbeitspunktes des den CC-FET z.B. ausbildenden integrierten MOSFETs zur Folge. Der zweite Regelkreis wirkt dem entgegen durch eine Potentialänderung am Gate bzw. durch Anlegen einer entsprechend entgegenwirkenden Gatespannung Vgate. Die Spannungs-änderung am Gate entspricht dazu der inversen Spannungsänderung an der sensitiven Schicht des CC-FETs. Da sich die beiden Spannungen an den beiden Gassensoren aufheben, wird der Ausgangszustand, d.h. idealerweise Potential- und Feldfreiheit, aufrechterhalten.

Vorzugsweise ist eine Umsetzung der Komponenten für den Gassensor derart möglich, dass auf ein Demonstratorsystem eine mit den eigentlichen Gassensoren bestückte Trägerplatine aufgebracht und elektrisch verschaltet wird. Zudem wird auf dieser Platine eine Messkammer installiert, die es ermöglicht, die Einheit für eine erste Initialisierung am Gasmessplatz zu vermessen und die unterschiedlichen Sensoreigenschaften der beiden Gassensoren bzw. kapazitiven Größen C1, C2 und C3 bei definierten Gasen mittels des Demonstratorsystems zu studieren.

Fig. 2 zeigt beispielhaft in teilweiser Schnittansicht ein Substrat 30 aus insbesondere Silizium Si. In der außenseitigen Oberfläche ist eine Mulde eingelassen, in welcher parallel zum Muldenrand ein so genannter Guard-Ring 34 auf einer bodenseitigen Oberfläche der Mulde angeordnet ist. Beispielhaft repräsentiert wird ein solcher Guard-Ring 34 bei einem Vergleich mit der Schaltung in Fig. 1 und 2 durch den bzw. die Widerstände R.

Oberhalb der Mulde und die Seitenränder der Mulde beabstandet überlappend ist parallel dazu ein so genanntes Suspended-Gate 31 angeordnet. Um einen Lufteintritt bzw. Gaseintritt des zu detektierenden Gases in einen Luftspalt 33 zwischen dem Suspended-Gate 31 und der Substratoberfläche zwischen dem Guardring 34 zu ermöglichen, ist das Suspended-Gate 31 auf eine oder mehrere Auflagen 32 aufgesetzt. Die Auflagen 32 ermöglichen einen Gasdurchtritt bzw. Luftdurchtritt in den Luftspalt 33, beispielsweise durch entsprechende Lücken zwischen einzelnen Auflageelementen der Auflagen 32. In den Schaltbildern entspricht die Substratoberfläche zwischen dem Guardring 34 dem Oberflächen-Knoten N.

Innerhalb des Substrats 30 sind unterhalb der Mulde bzw. unterhalb des Luftspalts 33 Elemente einer Transistor-Struktur bzw. einer Anordnung aus Elektroden eingearbeitet. Parallel zum Luftspalt 33 und von diesem durch Silizium Si beabstandet, erstreckt sich eine Elektrode, welche die Gate-Elektrode 35 ausbildet. Noch weiter beabstandet von dem Luftspalt 33 erstreckt sich parallel zu der Gate-Elektrode 35 ein Well bzw. eine Well-Elektrode 37 als eine Wannenstruktur. Die Gate-Elektrode 35 ist entweder mit der entsprechenden Gate-Elektrode des CC-FET verbunden oder durch das Substrat 30 in seitlicher Richtung so weit verlängert, dass sie die Gate-Elektrode des CC-FET ausbildet. Die Ga-te-Elektrode 35 entspricht in den Schaltbildern dem Gate-Knoten Nfg.

Die baulich konstruktiven Komponenten aus Fig. 2 übernehmen Funktionen von einzelnen der Schaltungskomponenten aus Fig. 1. So bildet die Anordnung aus dem Suspended-Gate 31, dem Luftspalt 33 und dem Boden des Luftspalts 33 bzw. der entsprechenden Oberseite des Substrats 30 die erste kapazitive Größe C1 und dritte kapazitive Größe C3 aus. Der Oberflächen-Knoten N wird durch die Substratoberfläche symbolisiert, wobei der Widerstand R durch den Guardring 34 ausgebildet ist. Der Gate-Knoten Nfg, welcher als hinsichtlich des Potentials neutraler Punkt zu halten ist, wird durch die Gate-Elektrode 35 repräsentiert. Die zweite kapazitive Größe C2 wird in der konstruktiven Anordnung durch die Well-Elektrode 37 und die Gate-Elektrode 35 ausgebildet, welche durch Material des Substrats 30 voreinander beabstandet sind.

Fig. 3 zeigt schematisch anhand von Blöcken einzelne Verfahrensschritte, welche Bestandteile des ersten und des zweiten Regelkreises sind. Zentrales Element ist eine Hauptsteuereinrichtung, welche in einem ersten Block 1 skizziert ist und welche eine Ausgabe proportionaler Steuerspannungen veranlasst, wenn ein Messwert eines Source-Drain-Stroms IDS verschieden von einer entsprechenden Sollgröße ist.

Veranlasst wird entsprechend in einem zweiten Block 2 eine Signalbearbeitung, wobei ein entsprechend bearbeitetes Signal an einen dritten Block 3 zur Verstärkung und Filterung und von diesem an einen Signalausgabeblock 4 weitergeleitet wird. Zusätzlich oder alternativ werden die Signale oder weitere Signale des zweiten Blocks 2 mit der Signalverarbeitung einem fünften Block zur Gassignal-Kompensation zugeführt, welcher eine entsprechende Gate-Spannung Vgate an den freien Anschluss des ersten Kondensators bzw. der ersten kapazitiven Größe C1 anlegt.

Komponenten des zweiten Regelkreises werden ebenfalls durch den ersten Block 1 der Hauptsteuereinrichtung aktiviert. In einem entsprechend angesteuerten sechsten Block 6 wird eine so genannte Infinite Sample & Hold-Funktion ausgeführt, mit welcher in einem siebten Block 7 eine Guard-Ring-Nachführung zum Reduzieren einer Drift veranlasst wird. Der sechste Block 6 kann, wie durch einen achten Block 8 skizziert, mittels einer manuellen Suche des Arbeitspunkts angesteuert werden. Außerdem wird dem sechsten Block 6 eine entsprechende Anweisung aus einem neunten Block 9 angelegt, ob zwischen einem Kalibrieren und einem Messen zu schalten ist. Ein bidirektionaler Austausch findet zwischen dem sechsten Block 6 und einem zehnten Block 10 statt, in welchem ein Level-Indikator ausgebildet ist. Ermöglicht wird dadurch eine Veranschaulichung einer Arbeitspunktsuche. Aus dem sechsten Block 6 wird direkt das Well-Potenzial Vwell angesteuert bzw. dessen Nachführung veranlasst.

## Patentansprüche

1. Schaltungsanordnung mit einem CC-FET-Gassensor (30- 33) zum Detektieren eines Gases in einem Luftspalt (33) und mit einer Steuereinrichtung (C) zum Nachführen des CC-FET-Gassensors (30- 33) wobei zwei Regelkreise vorgesehen sind, und wobei der zweite Regelkreis ausgebildet ist, eine sich ändernde Gasspannung (Vgas = Vgate) durch einen Potentialänderung am Gate durch Anlegen einer entsprechend entgegenwirkenden Gatespannung (Vgate) zu regeln,
**dadurch gekennzeichnet, dass**
der erste Regelkreis ausgebildet ist, eine Wellspannung (Vwell) und eine Spannung (Vguard) über einen Guardring (34) zu regeln, und die Spannung (Vguard) proportional zu dem Well-Potential nachführt.

2. Schaltungsanordnung nach Anspruch 1, wobei die beiden Regelkreise derart eigenständig aber gekoppelt betriebenen ausgestaltet und/oder gesteuert sind dass im Luftspalt (33) Feld- und/oder Potentialfreiheit herrscht.

3. Schaltungsanordnung nach einem vorstehenden Anspruch, wobei mittels einer Sample- & Hold-Schaltung eine in einem Luftspalt (33) mit einem zu detektierenden Gas feld- und potentialfreie Ansteuerung des CC-FET-Gassensors (30 - 33) umsetzbar ist.

4. Schaltungsanordnung nach einem vorstehenden Anspruch, wobei eine Gateelektrode (35) in einem Substrat (30) zwischen einer dritten kapazitiven Größe (C3) und einer zweiten kapazitiven Größe (C2) geschaltet ist und wobei der Guardring (34) an einen Oberflächen-Knoten (N) zwischen einer ersten kapazitiven Größe (C1) und der dritten kapazitiven Größe (C3) geschaltet ist.

5. Schaltungsanordnung nach Anspruch 4, wobei bei dem CC-FET-Gassensor (30 - 33) die erste kapazitive Größe (C1) ausgebildet ist durch den Luftspalt (33) zwischen einem suspendierten Gate (31) und einer innerhalbs des Guardrings (34) liegenden Oberfläche des Substrats (30) und die dritte kapazitive Größe (C3) ausgebildet ist durch das Substrat zwischen der Oberfläche und der Gateelektrode (35).

6. Schaltungsanordnung nach Anspruch 4 oder 5, wobei die zweite kapazitive Größe (C2) ausgebildet ist
- durch die Gateelektrode (35) unterhalb des Luftspalts (34) innerhalb des Substrats und
- durch eine Well-Elektrode (37) mit der Wellspannung (Vwell) unterhalb der Gateelektrode (35) und von der Gateelektrode (35) beabstandet innerhalb des Substrats (30).

7. Schaltungsanordnung nach einem der Ansprüche 4 bis 6, wobei ein erster Sensor durch die erste kapazitive Größe (C1) und dritte kapazitive Größe (C3) und ein zweiter Sensor gleichen Typs zum ersten Sensor durch die zweite kapazitive Größe (C2) und eine FET- Struktur (FET) im Substrat (30) ausgebildet ist.

8. Schaltungsanordnung nach Anspruch 7, wobei der erste Sensor zum gassensitiven Detektieren des Gases im Luftspalt (33) und der zweite Sensor zum Erfassen oder Auswerten physikalischer Umgebungseinflüsse innerhalb der Schaltungsanordlnung ausgebildet oder strukturiert sind.

9. Schaltungsanordnung nach Anspruch 8, wobei der zweite Sensor zum Erfassen oder Auswerte eines Temperatureinflusses ausgebildet oder strukturiert ist.

10. Verfahren zur Ansteuerung eines CC-FET-Gassensors nach einem vorstehenden Anspruch, bei dem
in einem zweiten Regelkreis eine Kompensation eines Messsignals eines zu detektierenden Gases im Luftspalt (33) durchgeführt wird, und
in einem ersten Regelkreis eine Wellspannung (Vwell) und eine Spannung (Vguard) über einen Guardring (34) geregelt wird, und die Spannung (Vguard) proportional zu dem Well-Potential nachgeführt wird.

11. Verfahren nach Anspruch 10, bei dem im ersten Regelkreis die Spannung (Vguard) des Guardrings (34) des CC-FET-Gassensors (30 - 33) derart proportional zu einem Well-Potential (Vwell) nachgeführt wird, dass eine Potentialdifferenz über den Luftspalt (33) ausgeschlossen wird.

12. Verfahren nach Anspruch 10 oder 11, bei dem im zweiten Regelkreis im Falle einer Änderung eines Markergases im Luftspalt (33) ein zusätzliches Potential innerhalb einer gassensitiven Schicht im Luftspalt (34) entsteht und eine daraus resultierende Potentialänderung eines floating Gates und eine Verschiebung eines Arbeitspunktes eines integrierten MOSFETs durch Anlegen einer entsprechend entgegenwirkenden Gatespannung (Vgate) kompensiert wird.

13. Verwendung einer Schaltungsanordnung nach einem der Ansprüche 1 bis 9, für einen CC-FET-Gassensor oder eines Verfahrens nach einem der Ansprüche 10 bis 12 als Atemluft-Gassensor zum Bestimmen oder Detektieren eines Gasanteils in Atemluft.

## Claims

1. Circuit arrangement with a CC-FET gas sensor (30 - 33) for detecting a gas in an air gap (33) and with a control device (C) for adjusting the CC-FET gas sensor (30 - 33), wherein two regulating circuits are provided and wherein the second regulating circuit is constructed to regulate a changing gas voltage (Vgas = Vgate) by a change in potential at the gate through application of a corresponding opposing gate voltage/Vgate), **characterised in that**
the first regulating circuit is constructed to regulate a well voltage (Vwell) and a voltage (Vguard) by way of a guard ring (34) and to adjust the voltage (Vguard) proportionally to the well potential.

2. Circuit arrangement according to claim 1, wherein the two regulating circuits are so designed and/or controlled to be operated independently, but in coupled manner that field and/or potential freedom prevails in the air gap (33).

3. Circuit arrangement according to one of the preceding claims, wherein by mean of a sample-and-hold circuit a field-free and potential-free controlling of the CC-FET gas sensor (30 - 33) can be realised in an air gap (33) with a gas to be detected.

4. Circuit arrangement according to a preceding claim, wherein a gate electrode (35) is connected in a substrate (30) between a third capacitive variable (C3) and a second capacitive variable (C2) and wherein the guard ring (34) is connected at a surface junction (N) between a first capacitive variable (C1) and the third capacitive variable (C3).

5. Circuit arrangement according to claim 4, wherein for the CC-FET gas sensor (30 - 33) the first capacitive variable (C1) is formed by the air gap (33) between a suspended gate (31) and a surface of the substrate (30) lying within the guard ring (34) and the third capacitive variable (C3) is formed by the substrate between the surface and the gate electrode (35).

6. Circuit arrangement according to claim 4 or 5, wherein the second capacitive variable (C2) is formed
- by the gate electrode (35) below the air gap (34) within the substrate and
- by a well electrode (37) with the well voltage (Vwell) below the gate electrode (35) and at a spacing from the gate electrode (35) within the substrate (30).

7. Circuit arrangement according to any one of claims 4 to 6, wherein a first sensor is formed by the first capacitive variable (C1) and third capacitive variable (C3) and a second sensor of the same type as the first sensor is formed by the second capacitive variable (C2) and an FET structure (FET) in the substrate (30).

8. Circuit arrangement according to claim 7, wherein the first sensor is constructed or structured for gas-sensitive detection of the gas in the air gap (33) and the second sensor for detection or evaluation of physical environmental influences within the circuit arrangement

9. Circuit arrangement according to claim 8, wherein the second sensor is constructed or structured by detecting or evaluating a temperature influence.

10. Method of controlling a CC-FET gas sensor according to any one of the preceding claims, in which
- in a second regulating circuit compensation for a measurement signal of a gas, which is to be detected, in the air gap (33) is provided and
- in a first regulating circuit a well voltage (Vwell) and a voltage (Vguard) by way of a guard ring (34) are regulated and the voltage is adjusted proportionally to the well potential.

11. Method according to claim 10, in which in the first regulating circuit the voltage (Vguard) of the guard ring (34) of the CC-FET gas sensor (30 - 33) is so adjusted in proportion to a well potential (Vwell) that a potential difference across the air gap (33) is excluded.

12. Method according to claim 10 or 11, in which in the second regulating circuit in the case of change of a marker gas in the air gap (33) an additional potential arises within a gas-sensitive layer in the air gap (34) and compensation for a change in potential, which results therefrom, of a floating gate and a displacement of a working point of an integrated MOSFET are provided by application of a corresponding opposing gate voltage (Vgate).

13. Use of a circuit arrangement according to any one of claims 1 to 9, for a CC-FET gas sensor or of a method according to any one of claims 10 to 12 as a breathable-air gas sensor for determination or detection of a gas proportion in breathable air.

## Revendications

1. Circuiterie dotée d'un capteur de gaz CC FET (30- 33) pour la détection d'un gaz dans un entrefer (33) et d'un dispositif de commande (C) pour l'ajustement du capteur de gaz CC-FET (30- 33), dans laquelle il est prévu deux circuits de régulation, et dans laquelle le deuxième circuit de régulation est réalisé de façon à réguler une tension de gaz variable (Vgaz = Vgrille) par une variation du potentiel à la grille par application d'une tension de grille opposée correspondante (Vgrille), **caractérisée en ce que** le premier circuit de régulation est réalisé de façon à réguler une tension de puits (Vpuits) et une tension (Vprot) sur un anneau de protection (34), et ajuste la tension (Vprot) proportionnellement au potentiel de puits.

2. Circuiterie selon la revendication 1, dans laquelle les deux circuits de régulation sont configurés et/ou commandés en fonctionnement autonome ou couplé de telle manière qu'il règne dans l'entrefer (33) une absence de champ et/ou de potentiel.

3. Circuiterie selon une revendication précédente, dans laquelle une commande libre de champ et de potentiel du capteur de gaz CC-FET (30-33) avec un gaz à détecter dans un entrefer (33) peut être convertie au moyen d'un circuit échantillonneur.

4. Circuiterie selon une revendication précédente, dans laquelle une électrode de grille (35) est connectée dans un substrat (30) entre une troisième grandeur capacitive (C3) et une deuxième grandeur capacitive (C2) et dans laquelle l'anneau de protection (34) est connecté à un noeud de surface (N) entre une première grandeur capacitive (C1) et la troisième grandeur capacitive (C3).

5. Circuiterie selon la revendication 4, dans laquelle, dans le capteur de gaz CC-FET (30 - 33), la première grandeur capacitive (C1) est formée par l'entrefer (33) entre une grille suspendue (31) et une surface du substrat (30) située à l'intérieur de l'anneau de protection (34) et la troisième grandeur capacitive (C3) est formée par le substrat entre la surface et l'électrode de grille (35).

6. Circuiterie selon la revendication 4 ou 5, dans laquelle la deuxième grandeur capacitive (C2) est formée
- par l'électrode de grille (35) en dessous de l'entrefer (33) à l'intérieur du substrat, et
- par une électrode de puits (37) avec la tension de puits (Vpuits) en dessous de l'électrode de grille (35) et à distance de l'électrode de grille (35) à l'intérieur du substrat (30).

7. Circuiterie selon l'une quelconque des revendications 4 à 6, dans laquelle un premier capteur est formé par la première grandeur capacitive (C1) et la troisième grandeur capacitive (C3) et un deuxième capteur du même type que le premier capteur est formé par la deuxième grandeur capacitive (C2) et une structure FET (FET) dans le substrat (30).

8. Circuiterie selon la revendication 7, dans laquelle le premier capteur est réalisé ou structuré pour la détection sensible au gaz du gaz dans l'entrefer (33) et le deuxième capteur est réalisé ou structuré pour la détection ou l'évaluation d'influences physiques ambiantes à l'intérieur de la circuiterie.

9. Circuiterie selon la revendication 8, dans laquelle le deuxième capteur est réalisé ou structuré de façon à détecter ou à évaluer une influence de la température.

10. Procédé de commande d'un capteur de gaz CC-FET selon une revendication précédente, dans lequel on effectue dans un deuxième circuit de régulation une compensation d'un signal de mesure d'un gaz à détecter dans l'entrefer (33), et on régule dans un premier circuit de régulation une tension de puits (Vpuits) et une tension (Vprot) sur un anneau de protection (34), et on ajuste la tension (Vprot) proportionnellement au potentiel de puits.

11. Procédé selon la revendication 10, dans lequel on ajuste dans le premier circuit de régulation la tension (Vprot) de l'anneau de protection (34) du capteur de gaz CC-FET (30 - 33) proportionnellement à un potentiel de puits (Vpuits), de telle manière qu'une différence de potentiel sur l'entrefer (33) soit exclue.

12. Procédé selon la revendication 10 ou 11, dans lequel il apparaît, dans le deuxième circuit de régulation, dans le cas d'un changement d'un gaz marqueur dans l'entrefer (33), un potentiel supplémentaire à l'intérieur d'une couche sensible au gaz dans l'entrefer (33) et on compense un changement de potentiel qui en résulte d'une grille flottante et un déplacement d'un point de travail d'un MOSFET intégré par application d'une tension de grille opposée correspondante (Vgrille).

13. Utilisation d'une circuiterie selon l'une quelconque des revendications 1 à 9 pour un capteur de gaz CC-FET ou d'un procédé selon l'une quelconque des revendications 10 à 12 comme capteur de gaz de l'air respiratoire pour la détermination ou la détection d'une proportion de gaz dans l'air respiratoire.
